# EUROPÄISCHE PATENTSCHRIFT

(11) **EP 2 566 648 B1**
(45) Veröffentlichungstag und Bekanntmachung des Hinweises auf die Patenterteilung: **03.06.2015**
(21) Anmeldenummer: 11709084.5
(22) Anmeldetag: 09.03.2011
(51) Int. Cl.: B23D 61/14

(54) **SÄGEBLATT**
SAW BLADE
LAME DE SCIE

(30) Priorität: 07.05.2010 DE 102010028748
(43) Veröffentlichungstag der Anmeldung: 13.03.2013
(73) Patentinhaber: Robert Bosch GmbH, 70442 Stuttgart (DE)
(72) Erfinder: GROLIMUND, Daniel, CH-4528 Zürich (CH)
(86) Internationale Anmeldenummer: PCT/EP2011/053505
(87) Internationale Veröffentlichungsnummer: WO 2011/138064

(56) Entgegenhaltungen:
- EP-A1- 0 318 445
- DE-U1- 20 316 149
- DE-U1- 29 703 232
- FR-A- 964 651

## Beschreibung

Die Erfindung bezieht sich auf ein Sägeblatt mit in einer Reihe liegenden Sägezähnen nach dem Oberbegriff des Anspruches 1. Ein solches sägeblatt ist der DE 297 03 232 41 zu entnehmen.

### Stand der Technik

Aus der DE 203 16 149 U1 ist ein Stichsägeblatt für eine Stichsäge bekannt, wobei das Stichsägeblatt ein Einspannende zur Befestigung in der Werkzeugmaschine aufweist und zwischen dem Einspannende und der Sägeblattspitze an einer Zahnseite eine Vielzahl von Sägezähnen angeordnet sind. Vom Einspannende zur Sägeblattspitze weist das Stichsägeblatt eine zunehmende Teilung auf, bei der sowohl die Sägezähne als auch die zwischenliegenden Zahnlücken in ihrer Größe anwachsen. Die Sägezähne sind hierbei in Gruppen geordnet, wobei innerhalb einer Gruppe die Sägezähne und die zwischenliegenden Zahnlücken die gleiche Geometrie aufweisen und von Gruppe zu Gruppe die Teilung zunimmt.

Aus der DE 297 03 232 U1 ist ein Stichsägeblatt mit einer progressiv aufsteigenden Zahnteilung bekannt, bei der die kleinen Sägezähne nahe dem Einspannende und die größeren Zähne nahe der Sägeblattspitze angeordnet sind.

Darüber hinaus ist es bekannt, Sägeblätter mit Hartmetallzähnen zu versehen, welche vorzugsweise bei der Bearbeitung von abrasiven Materialien eingesetzt werden. Die Verbindung zwischen dem Sägeblatt und den Hartmetallzähnen erfolgt beispielsweise mittels Widerstandsschweißens.

### Offenbarung der Erfindung

Der Erfindung liegt die Aufgabe zugrunde, ein Sägeblatt konstruktiv so auszuführen, dass Hartmetallzähne in einfacher Weise und mit hoher Güte mit dem Sägeblatt verbunden werden können.

Diese Aufgabe wird erfindungsgemäß mit den Merkmalen des Anspruches 1 gelöst. Die Unteransprüche geben zweckmäßige Weiterbildungen an.

Das erfindungsgemäße Sägeblatt, welches insbesondere in handgeführten, elektromotorisch angetriebenen Hubsägen eingesetzt wird, weist eine Zahnseite auf, an der in einer Reihe liegend eine Vielzahl von Sägezähnen angeordnet sind. Die Sägezähne weisen ausgehend vom Einspannende, über das das Sägeblatt in der Werkzeugmaschine eingespannt wird, zur Sägeblattspitze hin eine zunehmende Teilung auf, bei der der Abstand zwischen den Sägezähnen zunimmt. Jeder Sägezahn des Sägeblatts besteht aus einem Zahnträger, welcher einteilig mit dem Sägeblatt ausgeführt ist, und einem als separates Bauteil ausgeführten Hartmetallzahn, der mit dem Zahnträger verbunden wird, insbesondere durch Schweißen oder durch Löten. In Betracht kommt beispielsweise Widerstandsschweißen oder Hartlöten.

Das Sägeblatt weist mehrere Zahnträger auf, die die gleiche Geometrieform und Größe besitzen, wobei trotz der gleichbleibenden Geometrie eine in Achsrichtung des Sägeblatts zunehmende Teilung besteht, welche dadurch realisiert ist, dass zwischen den Zahnträgern gleicher Geometrie größere Zahnlücken bestehen. Die sich ändernde Teilung wird somit im Unterschied zum Stand der Technik ausschließlich über unterschiedlich große Zahnlücken realisiert und nicht über eine Änderung der Größe bzw. der Geometrie des Zahnträgers. Dies hat den Vorteil, dass der Energieeintrag, welcher für die jeweilige Verbindungsart von Hartmetallzähnen und Zahnträger erforderlich ist, für die betreffende Gruppe von Zahnträgern gleicher Größe bzw. Geometrie pro Zahn identisch ist. Dies stellt eine erhebliche Vereinfachung bei der Herstellung des Sägeblattes dar. Zudem wird die Verbindungsqualität über die betreffende Gruppe der Zähne gleich gehalten. Auch ist im Falle einer Schränkung von Sägezähnen eine einfache Auslegung des Schränkwerkzeuges und ein entsprechend vereinfachter Schrähkprozess möglich.

Die Zahnträger gleicher Geometrie weisen die gleiche Form bzw. Kontur auf. Die die Geometrie der Zahnträger bestimmenden Parameter sind gleich, wobei unterschiedliche, zwischen einer Zahnspitze und einem Zahngrund gemessene Höhen -in Querrichtung gesehen, also orthogonal zur Längsachse des Sägeblatts - der Zahnträger aufgrund verschieden tiefer Zahnlücken zulässig sind. Bezüglich einer an die Zahnspitzen angelegten Geraden in Längsrichtung des Sägeblatts und einer parallel in Richtung des Zahngrundes versetzten Geraden, die durch den Zahngrund mit geringster Tiefe geführt ist, besteht bei mindestens zwei Zahnträgern, vorzugsweise bei der Mehrzahl aller Zahnträger oder bei sämtlichen Zahnträgern Identität, die auch die Höhe der Zahnträger einschließt.

Der Energieeintrag erfolgt, wie oben dargestellt, entweder im Wege des Schweißens oder des Hartlötens.

Gemäß einer vorteilhaften Ausführung ist vorgesehen, dass mehrere Sägezähne zu einer Zahngruppe zusammengefasst sind, wobei innerhalb einer Zahngruppe die Teilung zwischen den Sägezähnen gleich bleibt und eine Änderung der Teilung von einer Zahngruppe zur benachbarten Zahngruppe besteht. Bei gleichbleibender Teilung bleiben sowohl die Geometrie der Zahnträger als auch die Zahnlücken gleich, wohingegen bei einer sich ändernden Teilung zwar die Zahnträgergeometrie bzw. -größe gleich bleibt, jedoch die Zahnlücken sich ändern. Alternativ hierzu ist es auch möglich, dass zwischen mehreren aufeinander folgenden Sägezähnen zunehmende Zahnlücken vorgesehen sind, so dass die Zahnteilung von Zahn zu Zahn kontinuierlich zunimmt. Des Weiteren ist auch eine Kombination von sich kontinuierlicher Zahnteilung und einer Aufteilung in gleiche Gruppen möglich, beispielsweise dergestalt, dass mindestens eine Zahngruppe mit gleichartigen Sägezähnen vorgesehen ist, an die sich eine Reihe von Sägezähnen mit kontinuierlicher Zunahme der Zahnteilung anschließt.

Gemäß weiterer vorteilhafter Ausführung ist vorgesehen, dass zumindest der größere Anteil der Sägezähne des Sägeblatts Zahnträger gleicher Geometrie und Größe aufweist. Vorteilhafterweise sind sämtliche Zähne des Sägeblatts in derartiger Weise ausgeführt.

Gemäß einer weiteren zweckmäßigen Ausführung ist der Abstand zwischen dem Zahngrund und der nächstliegenden Zahnspitze in allen Sägezähnen gleich. In alternativer Ausführung ist der Abstand über die Länge des Sägeblattes nicht gleich, sondern ändert sich und nimmt insbesondere mit größer werdender Teilung zu.

Gemäß weiterer zweckmäßiger Ausführung weisen die Zahnlücken im Bereich des Zahngrundes eine teilkreisförmige Geometrie auf, wobei der Radius mit der Teilung zunimmt. In alternativer Ausführung kann der Zahngrund auch eine nichtteilkreisförmige Geometrie besitzen.

Gemäß weiterer zweckmäßiger Ausführung sind die Sägezähne geschränkt, wobei grundsätzlich auch eine nicht-geschränkte Ausführung in Betracht kommt.

Des Weiteren kann es zweckmäßig sein, dass die Zahnträger benachbart zur Zahnspitze ein Zahnbett mit einer Aufnahmefläche zur Aufnahme des Hartmetallzahns aufweisen. Im Bereich des Zahnbetts wird der Hartmetallzahn mit dem Zahnträger verbunden, wobei durch den Energieeintrag die Oberfläche des Zahnbetts und/oder die Kontur des Hartmetallzahns angeschmolzen wird. Gemäß einer ersten Ausführung besitzt die Aufnahmefläche am Zahnbett, die zur Aufnahme des Hartmetallzahns dient, eine teilkreisförmige Geometrie, welche an die zugeordnete Geometrie des Hartmetallzahns angepasst ist. Grundsätzlich möglich ist aber auch, gemäß einer alternativen Ausführung, eine nicht an die Außenkontur des Hartmetallzahns angepasste Geometrie der Aufnahmefläche am Zahnbett, beispielsweise eine ebene Ausführung der Aufnahmefläche. Durch das Anschmelzen passt sich das Zahnbett dennoch an die Außenkontur des Hartmetallzahns an.

Bei der Hubsäge, in der das Sägeblatt eingesetzt wird, handelt es sich beispielsweise um eine Stichsäge oder eine Säbelsäge. Entsprechend ist das Sägeblatt als Stichsägeblatt oder Säbelsägeblatt ausgeführt.

Weitere Vorteile und zweckmäßige Ausführungen sind den weiteren Ansprüchen, der Figurenbeschreibung und den Zeichnungen zu entnehmen. Es zeigen:
- Fig. 1: ein Sägeblatt mit einer Vielzahl von Sägezähnen, welche vom Einspannende zur Sägeblattspitze eine zunehmende Teilung besitzen, wobei die Sägezähne einen Zahnträger zur Aufnahme jeweils eines Hartmetallzahns aufweisen,
- Fig. 2: das Detail II aus Fig. 1 in vergrößerter Darstellung,
- Fig. 3: ein Hartmetallzahn in Einzeldarstellung.

In den Figuren sind gleiche Bauteile mit gleichen Bezugszeichen versehen.

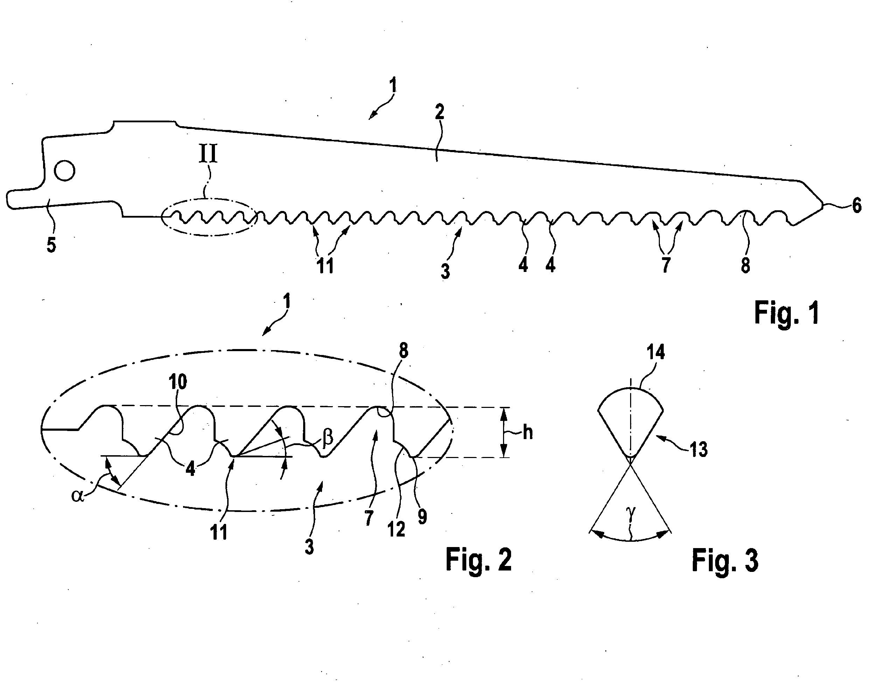

In Fig. 1 ist ein Sägeblatt 1 für eine als Säbelsäge ausgeführte Hubsäge dargestellt, wobei das Sägeblatt 1 einen Blattträger 2 mit einer Vielzahl von an einer Zahnseite 3 angeordneten Sägezähnen 11 aufweist, die sich zwischen einem Einspannende 5 und der Sägeblattspitze 6 erstrecken. Am Einspannende 5 wird das Sägeblatt 1 in der Stichsäge eingespannt. Die Sägezähne 11 bestehen jeweils aus einem Zahnträger 4, der einteilig mit dem Blattträger 2 ausgebildet ist, und einem separat ausgebildeten Hartmetallzahn 13 (Fig. 3), der fest mit dem Zahnträger 4 verbunden wird. In Fig. 1 sind am Sägeblatt lediglich die Zahnträger 4 ohne die Hartmetallzähne dargestellt.

Die Sägezähne 11 bzw. die Zahnträger 4 weisen vom Einspannende 5 zur Sägeblattspitze 6 eine zunehmende Teilung auf. Wie Fig. 1 in Verbindung mit Fig. 2 zu entnehmen, sind sämtliche Sägezähne 4 hinsichtlich ihrer Größe und Querschnittsgeometrie gleich ausgebildet. Die zunehmende Teilung wird allein über vergrößerte Zahnlücken zwischen benachbarten Sägezähnen 4 erreicht. Der Zahngrund 8 in jeder Zahnlücke 7 ist teilkreisförmig ausgeführt, wobei mit zunehmender Teilung der Radius des teilkreisförmigen Zahngrundes 8 zunimmt.

Wie insbesondere Fig. 2 zu entnehmen, ist der Abstand h zwischen dem Zahngrund 8 und der Zahnspitze 9 jedes Sägezahns 4 für alle Sägezähne konstant. Der Winkel α zwischen der Zahnbrust 10, die geradlinig ausgeführt ist, und einer zur Längsachse des Sägeblatts parallelen Linie im Bereich der Zahnspitze 9 jedes Zahnträgers 4 beträgt im Ausführungsbeispiel zumindest annähernd 50°. Der Winkel β zwischen der zur Längsachse des Sägeblatts parallelen Linie im Bereich der Zahnspitze 9 und einer Tangentialen an die Zahnspitze beträgt zumindest annähernd 20°.

In den Fig. 1 und 2 sind die Sägezähne 11 lediglich mit den Zahnträgern 4 dargestellt. Im fertig produzierten Zustand weisen die Sägezähne 11 zusätzlich zum Zahnträger 4 auch einen Hartmetallzahn 13 (Fig. 3) auf, welcher mit dem jeweiligen Zahnträger 4 durch Schweißen, insbesondere Widerstandsschweißen, oder Hartlöten verbunden wird. Zur Verbindung mit dem Hartmetallzahn 13 ist an jedem Zahnträger 4 ein Zahnbett 12 ausgebildet, welches sich benachbart zur Zahnspitze 9 auf der Zahnrückenseite befindet. Das Zahnbett 12 besitzt eine teilkreisförmige Geometrie, die an die Außenkontur 14 des Hartmetallzahns 13 angepasst ist. Es kann aber auch zweckmäßig sein, anstelle einer teilkreisförmigen Geometrie das Zahnbett 12 als ebene Aufnahmefläche auszubilden. Durch die Erwärmung beim Schweißen oder Löten schmilzt die Oberfläche des Zahnträgers 4 im Bereich des Zahnbetts 12 und/oder die Oberfläche an der Außenkontur 14 des Hartmetallzahns 13 an, so dass unterschiedliche Geometrien von Zahnbett 12 und Hartmetallzahn 13 durch weiches Material ausgeglichen wird.

Wie Fig. 3 zu entnehmen, besitzt der Hartmetallzahn 13 im Querschnitt winkelförmig zusammenlaufende Seitenflächen, die einen Winkel γ von zumindest annähernd 60° einschließen.

## Patentansprüche

1. Sägeblatt mit entlang einer Zahnseite (3) angeordneten Sägezähnen (11), die von einem Einspannende (5) des Sägeblatts (1) zu einer Sägeblattspitze (6) eine zunehmende Teilung aufweisend, **dadurch gekennzeichnet, dass** die Sägezähne (11) aus einem Zahnträger (4) und einem mit dem Zahnträger (4) verbundenen Hartmetallzahn (13) bestehen, wobei mehrere Zahnträger (4) die gleiche Geometrieform und Größe aufweisen und für die zunehmende Teilung zwischen Zahnträgern (4) gleicher Geometrieform und Größe größere Zahnlücken (7) vorgesehen sind.

2. Sägeblatt nach Anspruch 1, **dadurch gekennzeichnet, dass** mehrere Sägezähne (11) zu einer Zahngruppe zusammengefasst sind, wobei innerhalb einer Zahngruppe eine gleichbleibende Teilung zwischen den Sägezähnen (11) vorgesehen ist.

3. Sägeblatt nach Anspruch 1 oder 2, **dadurch gekennzeichnet, dass** zwischen mehreren aufeinanderfolgenden Sägezähnen (11) zunehmende Zahnlücken (7) vorgesehen sind.

4. Sägeblatt nach einem der Ansprüche 1 bis 3, **dadurch gekennzeichnet, dass** der Abstand zwischen Zahngrund (8) und Zahnspitze (9) in allen Sägezähnen (11) gleich ist.

5. Sägeblatt nach einem der Ansprüche 1 bis 4, **dadurch gekennzeichnet, dass** die Zahnlücken (7) im Bereich des Zahngrundes (8) eine teilkreisförmige Geometrie aufweisen.

6. Sägeblatt nach einem der Ansprüche 1 bis 5, **dadurch gekennzeichnet, dass** sämtliche Zahnträger (4) die gleiche Geometrie aufweisen.

7. Sägeblatt nach einem der Ansprüche 1 bis 6, **dadurch gekennzeichnet, dass** die Zahnträger (4) benachbart zur Zahnspitze (9) ein Zahnbett (12) mit einer Aufnahmefläche zur Aufnahme des Hartmetallzahns (13) aufweisen.

8. Sägeblatt nach Anspruch 7, **dadurch gekennzeichnet, dass** die Aufnahmefläche am Zahnbett (12) eine teilkreisförmige Geometrie aufweist.

9. Sägeblatt nach einem der Ansprüche 1 bis 8, **dadurch gekennzeichnet, dass** die Hartmetallzähne (13) auf den Zahnträger (4) aufgeschweißt sind.

10. Sägeblatt nach einem der Ansprüche 1 bis 9, **dadurch gekennzeichnet, dass** die Hartmetallzähne (13) durch Hartlöten mit dem Zahnträger (4) verbunden sind.

## Claims

1. Saw blade having saw teeth (11) which are arranged along a toothed side (3) and have an increasing pitch from a clamping end (5) of the saw blade (1) to a saw blade tip (6), **characterized in that** the saw teeth (11) consist of a tooth support (4) and a hard metal tooth (13) which is joined to the tooth support (4), wherein several tooth supports (4) have the same geometrical shape and size and larger tooth gaps (7) are provided for the increasing pitch between the tooth supports (4) with identical geometrical shape and size.

2. Saw blade according to Claim 1, **characterized in that** several saw teeth (11) are combined to form one tooth group, wherein a constant pitch between the saw teeth (11) is provided within one tooth group.

3. Saw blade according to Claim 1 or 2, **characterized in that** increasing tooth gaps (7) are provided between several consecutive saw teeth (11).

4. Saw blade according to one of Claims 1 to 3, **characterized in that** the space between the tooth root (8) and the tooth tip (9) is identical in all the saw teeth (11).

5. Saw blade according to one of Claims 1 to 4, **characterized in that** the geometry of the tooth gaps (7) in the region of the tooth root (8) is in the shape of a graduated circle.

6. Saw blade according to one of Claims 1 to 5, **characterized in that** all the tooth supports (4) have the same geometry.

7. Saw blade according to one of Claims 1 to 6, **characterized in that** the tooth supports (4) adjacent to the tooth tip (9) have a tooth bed (12) with a receiving surface for receiving the hard metal tooth (13).

8. Saw blade according to Claim 7, **characterized in that** the receiving surface on the tooth bed (12) has a geometry in the shape of a graduated circle.

9. Saw blade according to one of Claims 1 to 8, **characterized in that** the hard metal teeth (13) are welded onto the tooth support (4).

10. Saw blade according to one of Claims 1 to 9, **characterized in that** the hard metal teeth (13) are joined to the tooth support (4) by means of brazing.

## Revendications

1. Lame de scie comprenant des dents de scie (11) disposées le long d'un côté denté (3), qui présentent un pas croissant depuis une extrémité d'attache (5) de la lame de scie (1) jusqu'à une pointe (6) de la lame de scie, **caractérisée en ce que** les dents de scie (11) se composent d'un support de dent (4) et d'une dent en métal dur (13) connectée au support de dent (4), plusieurs supports de dent (4) présentant la même forme géométrique et la même taille et, pour le pas croissant entre les supports de dents (4), des espaces entre dents (7) plus grands de même forme géométrique et de même taille étant prévus.

2. Lame de scie selon la revendication 1, **caractérisée en ce que** plusieurs dents de scie (11) sont réunies pour former un groupe de dents, un pas uniforme entre les dents de scie (11) étant prévue à l'intérieur d'un même groupe de dents.

3. Lame de scie selon la revendication 1 ou 2, **caractérisée en ce que** des espaces entre dents croissants (7) sont prévus entre plusieurs dents de scie successives (11).

4. Lame de scie selon l'une quelconque des revendications 1 à 3, **caractérisée en ce que** la distance entre la base d'une dent (8) et la pointe d'une dent (9) est identique dans toutes les dents de scie (11).

5. Lame de scie selon l'une quelconque des revendications 1 à 4, **caractérisée en ce que** les espaces entre dents (7) présentent dans la région de la base de dent (8) une géométrie en forme de cercle partiel.

6. Lame de scie selon l'une quelconque des revendications 1 à 5, **caractérisée en ce que** tous les supports de dents (4) présentent la même géométrie.

7. Lame de scie selon l'une quelconque des revendications 1 à 6, **caractérisée en ce que** les supports de dents (4) présentent, en position adjacente à la pointe de dent (9), un lit de dents (12) avec une surface de réception pour recevoir la dent en métal dur (13).

8. Lame de scie selon la revendication 7, **caractérisée en ce que** la surface de réception présente sur le lit de dents (12) une géométrie en forme de cercle partiel.

9. Lame de scie selon l'une quelconque des revendications 1 à 8, **caractérisée en ce que** les dents en métal dur (13) sont soudées sur le support de dent (4).

10. Lame de scie selon l'une quelconque des revendications 1 à 9, **caractérisée en ce que** les dents en métal dur (13) sont connectées au support de dent (4) par brasage dur.
